# EUROPEAN PATENT SPECIFICATION

(11) **EP 2 889 438 B1**
(45) Date of publication and mention of the grant of the patent: **25.10.2017**
(21) Application number: 13833017.0
(22) Date of filing: 06.08.2013
(51) Int. Cl.: E04C 2/26, E04C 2/36, E04C 2/284

(54) **SANDWICH PANEL AND METHOD FOR MANUFACTURING SAME**
VERBUNDPLATTE UND VERFAHREN ZUR HERSTELLUNG DAVON
PANNEAU SANDWICH ET SON PROCÉDÉ DE FABRICATION

(30) Priority: 27.08.2012 KR 20120093571
(43) Date of publication of application: 01.07.2015
(73) Proprietor: LG Hausys, Ltd., Seoul 150-721 (KR)
(72) Inventor: KIM, Sung Min, Seoul 135-873 (KR)
(74) Representative: Gill Jennings & Every LLP
(86) International application number: PCT/KR2013/007066
(87) International publication number: WO 2014/035073

(56) References cited:
- WO-A2-2009/095426
- AU-A- 7 843 575
- CH-A- 436 637
- FR-A- 735 257
- FR-A- 944 010
- FR-A1- 2 621 524
- JP-A- H0 941 639
- JP-A- 2000 127 313
- JP-A- 2006 035 497
- JP-B2- 4 404 268
- KR-A- 20100 086 237
- KR-B1- 100 889 184

## Description

### [Technical Field]

The present invention relates to sandwich panels, a method for manufacturing the same, and a sandwich panel including the same.

### [Background Art]

In most cases, typical sandwich panels use balsa wood or foamed plastic as a core to reduce a weight thereof, or use a plastic or metallic honeycomb core as a core to satisfy sound insulation and flame retardancy. However, since most of the sandwich panels including the core as set forth above have a large flat plate shape and thus have a structural limit, there is a limit in applying these sandwich panels to structures having a curved surface or various appearances.

Although Korean Patent No. 10-0786335 relates to a sandwich panel for interior/exterior materials including a balsa wood panel and discloses that the balsa wood panel includes a unit panel and a heterogeneous material panel formed of any one of cork and a resin, the disclosed sandwich panel is aimed at reducing weight and improving sound insulation and thus still has a difficulty in securing moldability. Therefore, core-forming materials, which can reduce structural limits in moldability while ensuring mechanical properties, are being continuously studied as a core for sandwich panels. KR 2010 0086237 A discloses a sandwich panel comprising a core made of cork powder and a thermosetting resin.
WO 2009/095426 A2 discloses a foamed sheet composed of a blend of thermoplastic polymers and vegetable and/or mineral filler containing cork flour. The blend contains from 1 to 70% by weight of the cork flour.

### [Disclosure]

### [Technical Problem]

It is one aspect of the present invention to provide sandwich panels, wherein the core has a reduced weight and exhibits enhanced moldability and high mechanical properties.

It is a further aspect of the present invention to provide a method for manufacturing sandwich panels as set forth above.

### [Technical Solution]

In accordance with the present invention, the core for sandwich panels includes a composite in which a thermosetting resin and cork powder are combined, wherein the composite includes 10 parts by weight to 30 parts by weight of the cork powder based on 100 parts by weight of the thermosetting resin.

The cork powder may have a particle size of about 0.5 mm to about 3 mm.

The cork powder may have a specific gravity of about 0.06 to about 0.2.

The cork powder may include any one selected from the group consisting of carbonized cork powder, wood flour cork powder, natural cork powder, and combinations thereof.

The thermosetting resin may include any one selected from the group consisting of epoxy, polyester, polyurethane, polyamide, phenolic resins, and combinations thereof.

The composite may further include fiber fillers.

The composite may include about 10 parts by weight to about 30 parts by weight of the fiber fillers based on 100 parts by weight of the thermosetting resin.

The composite may have a density of about 0.5 g/m3 to about 0.7 g/m3.

In accordance with the present invention, the sandwich panel includes: a core for sandwich panels including a composite in which a thermosetting resin and cork powder are combined; and a pair of surface materials stacked on both surfaces of the core.

The surface materials may include any one selected from the group consisting of metal, cotton, wood, and combinations thereof.

In accordance with a further aspect of the present invention, a method for manufacturing sandwich panels includes: forming a composite by mixing a thermosetting resin and cork powder; and insert injection molding of the formed composite.

Formation of the composite may be performed by further mixing fiber fillers in addition to the thermosetting resin and the cork powder.

### [Advantageous Effects]

Since the core for sandwich panels exhibits high mechanical properties and exhibits excellent moldability upon manufacture of a sandwich panel, the core can be variously used.

In addition, since the sandwich panel includes a core manufactured by the method as defined in claim 10, the sandwich panel can have a reduced weight and thus be easily manufactured.

### [Description of Drawings]

Fig. 1 shows a schematic structure of a sandwich panel.
Fig. 2 is a process flowchart of a method for manufacturing a core for sandwich panels.
Fig. 3 is a mimetic diagram showing a process for manufacturing a core for sandwich panels using vacuum bagging molding.

### [Best Mode]

Hereinafter, embodiments of the present invention will be described in detail with reference to the accompanying drawings. It should be understood that the following embodiments are provided for illustration only and are not to be construed in any way as limiting the present invention. The scope of the present invention should be defined only by the accompanying claims.

### Core for sandwich panels

In accordance with the present invention, a core for sandwich panels includes a composite in which a thermosetting resin and cork powder are combined.

Mechanical properties of the core for sandwich panels are mostly based on properties of the thermosetting resin, and the cork powder provides a means of reducing weight and ease of moldability. The thermosetting resin and the cork powder can form the composite. Since the core for sandwich panels including the composite is lightweight and exhibits enhanced moldability and high mechanical properties, the core can be variously used for structures in which a sandwich panel is used. Specifically, the core for sandwich panels can be introduced to structures requiring no stiffness and no strength, such as wind turbines, boats, and the like.

As such, since a core for sandwich panels must fundamentally ensure mechanical properties and durability, and the core for sandwich panels according to the present invention simultaneously includes the thermosetting resin and the cork powder, the core for sandwich panels according to the present invention is lightweight and can exhibit moldability in addition to properties and durability which typical cores for sandwich panels exhibit.

When the composite is inserted into a mold and subjected to insert injection molding, for example, vacuum bagging molding, amounts of the thermosetting resin and the cork powder become appropriate. Since high pressure is applied upon vacuum bagging molding, if the amount of the thermosetting resin is excessive, the resin leaks out of a side of the mold and hardened. In addition, if the amount of the thermosetting resin is too low, the cork is not completely impregnated into the resin. Thus, it is important to adjust the amounts of the thermosetting resin and the cork powder.

The composite may include about 10 parts by weight to about 30 parts by weight, specifically about 10 parts by weight to about 20 parts by weight of the cork powder, based on 100 parts by weight of the thermosetting resin. If the amount of the cork powder is greater than about 30 parts by weight, there is a problem of deterioration in cork impregnation of the thermosetting resin, and if the amount of the cork powder is less than about 10 parts by weight in the composite, there is a concern of deterioration in weight reduction of the composite. Therefore, the cork powder is present in an amount within this range, whereby advantages of the composite can be easily realized in that the core for sandwich panels can secure constant density and flexural strength, and that a sandwich panel including the core can be freely molded.

The cork powder may be obtained from epidermis, cortex, primary phloem or secondary phloem of bark of cork oaks. In addition, the cork powder includes porous cells, and exhibits imputrescible properties, anti-contamination and flame retardancy. Specifically, the cork powder includes about 12 million porous cells per unit area (1 cm²), has impermeability and elasticity (Poisson's ratio=0), and may include a fatty acid, a small amount of lignin, ash, a resin and a carbohydrate.

The cork powder is not damaged by most organic solvents due to chemical inertness thereof, is extremely lightweight since the honeycombed porous cells are filled with air, and can be restored to an original state even after strongly pressed.

The cork powder may have a particle size of about 0.5 mm to about 3 mm. The particle size refers to an average diameter or representative diameter of particles. The cork powder is powder which has a size from about 0.5 mm to about 3 mm and has an angular round shape. Since the cork powder includes powder having a small particle size and powder having a large particle size, which are mixed therein, the cork powder can maximize mechanical properties of the core for sandwich panels.

Specifically, if the cork powder having a particle size of less than about 0.5 mm is combined in the composite, there is a concern of deterioration in external impact absorbing capability of the core, and if the particle size of the cork powder is about 3 mm, there can occur a problem in that the cork acts as a crack point since the cork powder does not effectively fill a space in the thermosetting resin. Therefore, the particle size of the cork powder is maintained within the range as set forth above, whereby the core for sandwich panels can exhibit excellent effects in that the core effectively absorbs impact and can ensure mechanical properties.

The cork powder may have a specific gravity of about 0.06 g/cm³ to about 0.2 g/cm³.

The specific gravity in a powder state refers to weight per unit volume (1 cm³). Since the cork powder maintains a low specific gravity within the range as set forth above, and thus exhibits good dispersability and is not settled, the cork powder has advantages in formation of the composite with the thermosetting resin.

The core for sandwich panels may include the composite in which the cork powder generally having low specific gravity and the thermosetting resin are combined. Thus, the core can have high mechanical properties of typical thermosetting resins simultaneously with other advantages of the cork powder, such as light weight, impact resistance, and the like.

Here, the cork powder includes any one selected from the group consisting of carbonized cork powder, wood flour cork powder, natural cork powder, and combinations thereof. In addition, the thermosetting resin may include any one selected from the group consisting of epoxy, polyester, polyurethane, polyamide, phenolic resins, and combinations thereof, without being limited thereto.

The composite may further include fiber fillers in addition to the thermosetting resin and the cork powder. The fiber fillers improve adhesion between the cork powder and the thermosetting resin in manufacture of the core for sandwich panels, and may be microfibers provided in the form of a cotton flock.

The microfibers are used as the fibrous fillers, whereby the core for sandwich panels can realize improvement in adhesion between the cork powder and the thermosetting resin. In addition, it could be confirmed that the microfibers provided in the form of a cotton flock as observed using a scanning electron microscope (SEM) had a particle size of about 1 µm to about 10 µm in the thermosetting resin.

The composite may include about 10 parts by weight to about 30 parts by weight of the fiber fillers based on 100 parts by weight of the thermosetting resin. If the amount of the fiber fillers is less than about 10 parts by weight, the composite has a low effect on reinforcement of stiffness despite improvement in adhesion between the thermosetting resin and the cork powder. In addition, the amount of the fiber fillers cannot be greater than about 30 parts by weight, since the fiber fillers are not used in an amount of greater than the amount of the cork powder, which is a main material for weight reduction of the composite.

The composite may have a density of about 0.5 g/m³ to about 0.7 g/m³. When the composite includes the thermosetting resin and the cork powder, the composite may have a constant weight ratio and a constant volume ratio between the thermosetting resin and the cork powder, and thus can secure a density within this range. Thus, the composite can simultaneously secure light weight, durability, and impact resistance.

With the composite having density and thickness within the ranges as set forth above, the core for sandwich panels can exhibit flexural properties distinguished from those of typical cores for sandwich panels. The flexural properties refer to resistance to bending and elasticity of the composite. Since the core for sandwich panels exhibits a certain level of flexural properties, the core can exhibit excellent moldability and can be used for structures covering complicated external shapes or curved surfaces, and the like. Thus, application fields of the core for sandwich panels can also be extended.

### Sandwich panel

In accordance with the present invention, a sandwich panel includes: a core for sandwich panels including a composite in which a thermosetting resin and cork powder are combined; and a pair of surface materials stacked on both surfaces of the core.

The sandwich panel refers to a composite material made into one piece structure in which a strong thin surface material is stacked on a durable lightweight core in the form of a sandwich such that the panel is suitable for purposes such as tensile or compressive impact, corrosion, abrasion resistance, and the like. Since the sandwich panel includes the core for sandwich panels, the sandwich panel can have a reduced weight and be easily manufactured.

Since overall stiffness of the sandwich panel is increased in proportion to the cube of a thickness of the panel, there is difficulty in that, as the thickness of the core increases, the panel also has an increased overall weight despite increased stiffness. However, since the core included in the sandwich panel includes the composite, in which the thermosetting resin and the cork powder are combined, in contrast to typical cores mainly using balsa wood, foamed resins, plastic or metallic honeycombs and the like, even though the thickness of the core is thick, the overall weight of the sandwich panel is not increased, and overall stiffness of the sandwich panel can be maintained.

The surface material is stacked on both surfaces of the core. Here, the surface material may include any one selected from the group consisting of metal, cotton, wood, and combinations thereof, without being limited thereto. Specifically, the metal may include aluminum plates and iron plates, and the cotton may include composite materials reinforced with glass fibers or carbon fibers. Higher mechanical properties of the surface material are preferable.

### Method for manufacturing core for sandwich panels

In accordance with a further aspect of the present invention, a method for manufacturing a core for sandwich panels includes: forming a composite by mixing a thermosetting resin and cork powder; and insert injection molding of the formed composite.

In typical methods for manufacturing a sandwich panel, a sandwich panel is manufactured by bonding an already manufactured core to a surface material. Since the sandwich panel is manufactured by bonding the surface material to the core, which is manufactured in a large plate shape while having a constant thickness, the sandwich panel is mainly used to cover a large flat surface and has difficulty in use for structures covering complicated outer shapes or curved surfaces and thus can have a limit in use in various fields. To solve this problem, the method for manufacturing a core for sandwich panels include a relatively simple molding process including insert injection molding such that the core can realize various shapes, thereby reducing manufacturing costs.

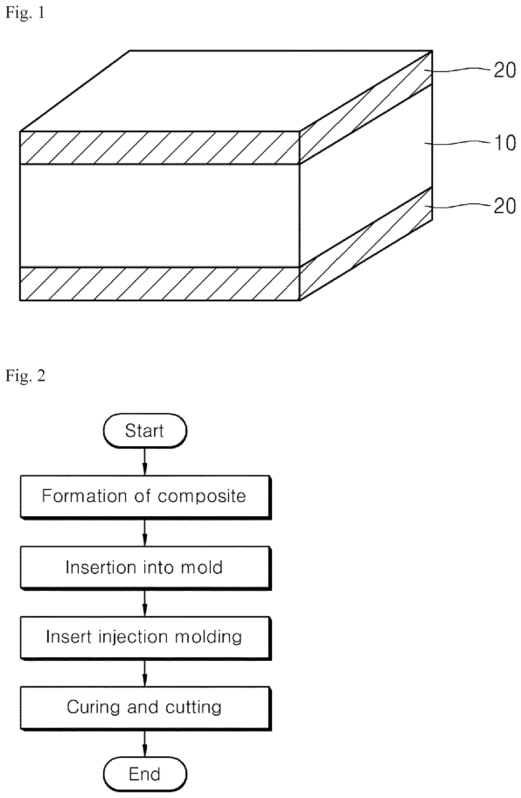

Fig. 2 is a process flowchart of a method for manufacturing a core for sandwich panels. The method for manufacturing a core for sandwich panels may include forming a composite by mixing a thermosetting resin and cork powder. Here, the thermosetting resin and the cork powder may be mixed in a certain ratio. In addition, the composite may be formed by further adding fiber fillers in addition to the thermosetting resin and the cork powder, and details of the fiber fillers are as described above.

The formed composite may be inserted into a mold and subjected to insert injection molding. Insert injection molding may be performed by any molding method without limitation, and a molding method capable of maximizing advantages obtained by the composite including the cork powder may be selected. Insert injection molding may include any one selected from the group consisting of resin transfer molding, compression molding, vacuum bagging molding, spray-up molding, and combinations thereof.

Resin transfer molding is a molding method in which the composite is changed into a cured state, while the composite is injected into a closed heated mold and then transferred. Resin transfer molding allows manufacture of a complicated shape and allows a core for sandwich panels having precise dimensions to be obtained. Compression molding is the most general molding method, in which the composite is inserted into a mold, followed by adjustment of a female mold and a male mold, thereby applying heat and pressure to the composite.

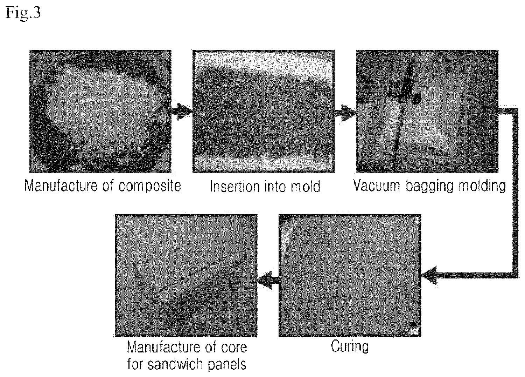

Vacuum bagging molding is a molding method in which the composite is placed in a mold, followed by curing while pressure is applied to the composite in a vacuum bag in a vacuum. Fig. 3 is a mimetic diagram showing a process for manufacturing a core for sandwich panels using vacuum bagging molding. In addition, spray-up molding refers to a molding method in which at least one layer of the composite is attached to a gel-coated mold using a spray, followed by impregnation and degassing using rolls to cure the composite.

All the methods for insert injection molding as set forth above have a feature in that a shape of the composite depending upon shapes of the mold is maintained after curing. Since the method for manufacturing a core for sandwich panels includes insert injection molding of the composite, the method can overcome difficulty of a typical method for manufacturing a core for sandwich panels, which is difficult to achieve complicated molding other than plate shape molding.

Hereinafter, the present invention will be described in more detail with reference to some examples. It should be understood that these examples are provided for illustration only and are not to be construed in any way as limiting the present invention.

### <Examples and Comparative Examples>

### Example 1

20 parts by weight of cork powder and 10 parts by weight of microfibers were mixed based on 100 parts by weight of an epoxy resin, thereby forming a composite. Here, the cork powder was obtained by mixing cork powder having a particle size of 0.5 mm and cork powder having a particle size of 3 mm in a ratio of 1:1. Next, a release agent was coated onto a mold, followed by inserting the composite into the mold. Next, the composite was cured by application of pressure in a vacuum at room temperature in a vacuum bag for 7 hours, followed by removal of the mold, thereby manufacturing a 5 mm thick core for sandwich panels.

### Example 2

15 parts by weight of cork powder and 15 parts by weight of microfibers were mixed based on 100 parts by weight of an epoxy resin, thereby forming a composite. Here, the cork powder was obtained by mixing cork powder having a particle size of 0.5 mm and cork powder having a particle size of 3 mm in a ratio of 1:1. Next, the composite was molded by injecting the composite into a mold heated through a narrow path, followed by removal of the mold, thereby manufacturing a 6 mm thick core for sandwich panels.

### Example 3

10 parts by weight of cork powder and 20 parts by weight of microfibers were mixed based on 100 parts by weight of an epoxy resin, thereby forming a composite. Here, the cork powder was obtained by mixing cork powder having a particle size of 0.5 mm and cork powder having a particle size of 3 mm in a ratio of 1:1. The composite was inserted into a heated mold, thereby performing press-molding using a compression molding machine. The composite was cured at room temperature for about 7 hours, followed by opening the mold and removing the composite, and then subjected to flash removal, thereby manufacturing a 7 mm thick core for sandwich panels.

### Comparative Example 1

Polyethylene terephthalate (PET) foam was used as a core for sandwich panels.

### Comparative Example 2

An aramid honeycomb core was used as a core for sandwich panels.

### Comparative Example 3

A core for sandwich panels was manufactured in the same manner as in Example 1 except that the composite was formed by mixing 40 parts by weight of cork powder and 10 parts by weight of microfibers based on 100 parts by weight of an epoxy resin.

### Comparative Example 4

A core for sandwich panels was manufactured in the same manner as in Example 1 except that the composite was formed by mixing 5 parts by weight of cork powder and 10 parts by weight of microfibers based on 100 parts by weight of an epoxy resin.

**Table 1**

| | Core for sandwich panels | Insert molding method |
|---|---|---|
| Example 1 | 20 (cork powder): 10 (fibrous filler) based on 100 parts by weight of an epoxy resin | Vacuum bagging molding |
| Example 2 | 15 (cork powder): 15 (fibrous filler) based on 100 parts by weight of an epoxy resin | Resin transfer molding |
| Example 3 | 10 (cork powder):20 (fibrous filler) based on 100 parts by weight of an epoxy resin | Compression molding |
| Comparative Example 1 | PET foam | - |
| Comparative Example 2 | Aramid honeycomb core | - |
| Comparative Example 3 | 40 (cork powder): 10 (fibrous filler) based on 100 parts by weight of an epoxy resin | Vacuum bagging molding |
| Comparative Example 4 | 5 (cork powder): 10 (fibrous filler) based on 100 parts by weight of an epoxy resin | Vacuum bagging molding |

### <Experimental Example> Physical properties of core for sandwich panels

Each of the cores for sandwich panels of Examples and Comparative Examples was evaluated as to flexural properties, compressive properties, and shear properties. Results are shown in Table 2
1) Flexural properties: A specimen having a length of 5 inch and a width of 1/2 inch was manufactured in accordance with ASTM D790 and used for measurement of flexural strength and flexural stiffness.
2) Compressive properties: A rectangular parallelepiped-shaped specimen having a width of 2 cm, a length of 2 cm and a thickness of 1.25cm was manufactured in accordance with ASTM 365 and used for measurement of compressive strength and compressive stiffness.
3) Shear properties: A specimen having a length of 6 inch and a width of 1 inch was manufactured in accordance with ASTM C393 and used for measurement of shear strength and shear stiffness.

**Table 2**

| | Flexural strength (MPa) | Flexural stiffness (GPa) | Compressive strength (MPa) | Compressive stiffness (GPa) | Shear strength (MPa) | Shear stiffness (GPa) |
|---|---|---|---|---|---|---|
| Example 1 | 13 | 1.2 | 4 | 0.4 | 1 | 0.03 |
| Example 2 | 15 | 1.5 | 5 | 0.4 | 2 | 0.03 |
| Example 3 | 14 | 1.3 | 4.5 | 0.3 | 1 | 0.04 |
| Comparative Example 1 | 3 | 0.1 | 1 | 0.1 | 1 | 0.03 |
| Comparative Example 2 | - | - | 3 | 0.3 | 0.8 | 0.02 |
| Comparative Example 3 | 9 | 0.8 | 2 | 0.4 | 1 | 0.03 |
| Comparative Example 4 | 12 | 1.0 | 1 | 0.2 | 1 | 0.03 |

From the results, it could be seen that, since the cores for sandwich panels of Examples 1 to 3 included the composite in which the thermosetting resin, the cork powder and the fiber fillers were combined, the cores of Examples 1 to 3 exhibited superior flexural, compressive and shear properties to the cores of Comparative Examples 1 to 2.

Specifically, from the results showing that the cores of Examples 1 to 3 exhibited higher flexural strength and flexural stiffness than the core of Comparative Example 1 using the PET foam as a core or than the core of Comparative Example 2 using the aramid honeycomb core, it could be seen that since the cores of Examples 1 to 3 included both the thermosetting resin and the cork powder, the cores of Examples 1 to 3 exhibited superior moldability to typical cores. In addition, from the results of compressive and shear properties, it could be seen that the cores for sandwich panels of Examples 1 to 3 also secured mechanical durability.

Further, since the composite including 30 parts by weight or more of the cork powder based on 100 parts by weight of the thermosetting resin was used in Comparative Example 3 and the composite including less than 10 parts by weight of the cork powder based on 100 parts by weight of the thermosetting resin was used in Comparative Example 4, the cores for sandwich panels of Comparative Examples 3 and 4 exhibited inferior flexural strength, flexural stiffness and compressive strength to the cores of Examples.

## Claims

1. A sandwich panel comprising a core (10) and a pair of surface materials (20) stacked on both surfaces of the core (10), the core (10) comprising:
a composite in which a thermosetting resin and cork powder are combined, **characterized in that** the composite comprises 10 parts by weight to 30 parts by weight of the cork powder based on 100 parts by weight of the thermosetting resin.

2. The panel according to claim 1 or 2, wherein the cork powder has a particle size of 0.5 mm to 3 mm.

3. The panel according to any one of the preceding claims, wherein the cork powder has a specific gravity of 0.06 to 0.2.

4. The panel according to any one of the preceding claims, wherein the cork powder comprises any one selected from the group consisting of carbonized cork powder, wood flour cork powder, natural cork powder, and combinations thereof.

5. The panel according to any one of the preceding claims, wherein the thermosetting resin comprises any one selected from the group consisting of epoxy, polyester, polyurethane, polyamide, phenolic, and combinations thereof.

6. The panel according to any one of the preceding claims, wherein the composite further comprises fiber fillers.

7. The panel according to claim 6, wherein the composite comprises 10 parts by weight to 30 parts by weight of the fiber fillers based on 100 parts by weight of the thermosetting resin.

8. The panel according to any one of the preceding claims, wherein the composite has a density of 0.5 g/m³ to 0.7 g/m³.

9. The sandwich panel according to claim 8, wherein the surface materials (20) comprise any one selected from the group consisting of metal, cotton, wood, and combinations thereof.

10. A method for manufacturing sandwich panels according to any of claims 1 to 9, the step of manufacturing the core (10) comprising:
forming a composite by mixing a thermosetting resin and cork powder, **characterized in that** the cork powder is 10 parts by weight to 30 parts by weight based on 100 parts by weight of the thermosetting resin; and **in that** the method comprises the step of insert injection molding of the formed composite.

11. The method according to claim 10, wherein forming the composite comprises further mixing fiber fillers in addition to the thermosetting resin and the cork powder.

## Patentansprüche

1. Verbundplatte, die einen Kern (10) und ein Paar von Oberflächenmaterialien (20) umfasst, die auf beiden Oberflächen des Kerns (10) gestapelt sind, wobei der Kern (10) umfasst:
Einen Verbundstoff, in dem ein wärmehärtbares Harz und Korkmehl kombiniert sind, **dadurch gekennzeichnet, dass**
der Verbundstoff 10 Gewichtsteile bis 30 Gewichtsteile des Korkmehls auf der Basis von 100 Gewichtsteilen des wärmehärtbaren Harzes umfasst.

2. Platte nach Anspruch 1 oder 2, wobei das Korkmehl eine Partikelgröße von 0,5 mm bis 3 mm aufweist.

3. Platte nach einem der vorhergehenden Ansprüche, wobei das Korkmehl eine relative Dichte von 0,06 bis 0,2 aufweist.

4. Platte nach einem der vorhergehenden Ansprüche, wobei das Korkmehl irgendeines umfasst, das aus der Gruppe selektiert ist, die aus verkohltem Korkmehl, Holzmehl-Korkmehl, natürlichem Korkmehl und Kombinationen davon besteht.

5. Platte nach einem der vorhergehenden Ansprüche, wobei das wärmehärtbare Harz irgendeines umfasst, das aus der Gruppe selektiert ist, die aus Epoxid, Polyester, Polyurethan, Polyamid, Phenol und Kombinationen davon besteht.

6. Platte nach einem der vorhergehenden Ansprüche, wobei der Verbundstoff ferner Faserfüllstoffe umfasst.

7. Platte nach Anspruch 6, wobei der Verbundstoff 10 Gewichtsteile bis 30 Gewichtsteile der Faserfüllstoffe auf der Basis von 100 Gewichtsteilen des wärmehärtbaren Harzes umfasst.

8. Platte nach einem der vorhergehenden Ansprüche, wobei der Verbundstoff eine Dichte von 0,5 g/m³ bis 0,7 g/ m³ aufweist.

9. Verbundplatte nach Anspruch 8, wobei die Oberflächenmaterialien (20) irgendeines umfassen, das aus der Gruppe selektiert ist, die aus Metall, Baumwolle, Holze und Kombinationen davon besteht.

10. Verfahren zur Herstellung von Verbundplatten nach einem der Ansprüche 1 bis 9, wobei der Schritt der Herstellung des Kerns (10) umfasst:
Bilden eines Verbundstoffs durch Mischen eines wärmehärtbaren Harzes und eines Korkmehls, **dadurch gekennzeichnet, dass**
das Korkmehl 10 Gewichtsteile bis 30 Gewichtsteile auf der Basis von 100 Gewichtsteilen des wärmehärtbaren Harzes ist;
das Verfahren den Schritt von Einlage-Spritzgießen des geformten Verbundstoffs umfasst.

11. Verfahren nach Anspruch 10, wobei das Formen des Verbundstoffs ferner das Mischen von Faserfüllstoffen zusätzlich zum wärmehärtbaren Harz und dem Korkmehl umfasst.

## Revendications

1. Panneau sandwich comportant un noyau (10) et deux matériaux en surface (20) empilés sur les deux surfaces du noyau (10), le noyau (10) comportant:
un composite dans lequel sont combinées une résine thermodurcissable et une poudre de liège,
**caractérisé en ce que**
le composite comprend entre 10 parties en poids et 30 parties en poids de la poudre de liège sur la base de 100 parties en poids de la résine thermodurcissable.

2. Panneau selon la revendication 1 ou 2, **caractérisé en ce que** la grosseur des particules de poudre de liège est comprise entre 0,5 mm et 3 mm.

3. Panneau selon l'une quelconque des revendications précédentes, **caractérisé en ce que** la densité de la poudre de liège est comprise entre 0,06 et 0,2.

4. Panneau selon l'une quelconque des revendications précédentes, **caractérisé en ce que** la poudre de liège est l'une quelconque des poudres sélectionnées dans le groupe composé de poudre de liège carbonisée, de poudre de liège à base de farine de bois, de poudre de liège naturelle, et d'une combinaison de ces poudres.

5. Panneau selon l'une quelconque des revendications précédentes, **caractérisé en ce que** la résine thermodurcissable est l'un quelconque des produits sélectionnés dans le groupe composé d'époxy, de polyester, de polyuréthane, de polyamide, de résines phénoliques et d'une combinaison de ces produits.

6. Panneau selon l'une quelconque des revendications précédentes, **caractérisé en ce que** le composite comprend par ailleurs des éléments de remplissage en fibre.

7. Panneau selon la revendication 6, **caractérisé en ce que** le composite comprend entre 10 parties en poids et 30 parties en poids des éléments de remplissage en fibre sur la base de 100 parties en poids de la résine thermodurcissable.

8. Panneau selon l'une quelconque des revendications précédentes, **caractérisé en ce que** la densité du composite est comprise entre 0,5 g/m³ et 0,7 g/m³.

9. Panneau en sandwich selon la revendication 8, **caractérisé en ce que** les matériaux de surface (20) comprennent l'un quelconque des matériaux sélectionnés dans le groupe composé de métal, de coton, de bois et d'une combinaison de ces matériaux.

10. Procédé de fabrication de panneaux sandwich selon l'une quelconque des revendications 1 à 9, la fabrication du noyau (10) consistant entre autres:
à former un composite en mélangeant une résine thermodurcissable avec de la poudre de liège; **caractérisé en ce que**
la poudre de liège comprend entre 10 parties en poids et 30 parties en poids sur la base de 100 parties en poids de la résine thermodurcissable; et
**en ce que** le procédé consiste à mouler par injection après insertion du composite formé.

11. Procédé selon la revendication 10, **caractérisé en ce que** la formation du composite consiste à mélanger par ailleurs les éléments de remplissage en fibre en plus de la résine thermodurcissable et de la poudre de liège.
